# EUROPEAN PATENT APPLICATION

(11) **EP 1 852 958 A2**
(43) Date of publication of application: **07.11.2007**
(21) Application number: 07008751.5
(22) Date of filing: 30.04.2007
(51) Int. Cl.: H02K 15/04

(54) **Method of forming single-layer coils**

(30) Priority: 03.05.2006 GB 0608634
(71) Applicant: Converteam Ltd, Rugby Warwickshire CV21 1BU (GB)
(72) Inventor: Clark, Paul Eaton, Rugby Warwickshire CV22 6LD (GB)
(74) Representative: Thacker, Darran Ainsley

(57) **Abstract**

The present invention provides a method of forming a single-layer coil for an electrical machine in a single process from a length of insulated rectangular conductor such as copper tape, for example. The coil is formed by winding the conductor around first and second coil-forming members (5, 7) provided on a beam (6) having a longitudinal axis and which is capable of being rotated about a first axis of rotation that is substantially parallel to the longitudinal axis of the beam and a second axis of rotation that is substantially at right angles to the longitudinal axis of the beam.

## Description

### Technical Field

The invention relates to a method of forming single-layer coils comprising substantially rectangular cross-section insulated conductors, and in particular stator coils, in a single operation. The coils can be used in physically large electrical machines.

### Background Art

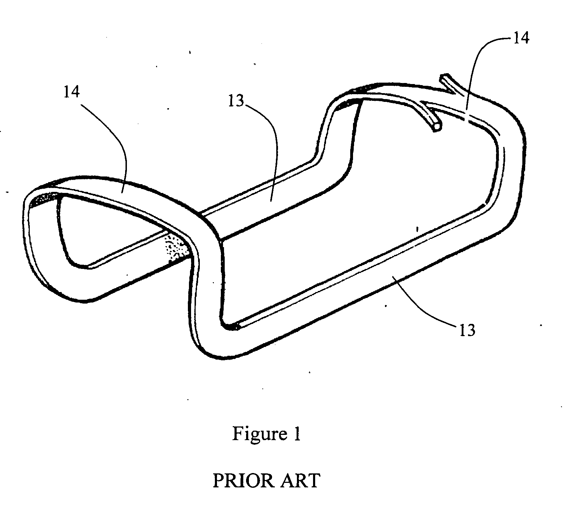

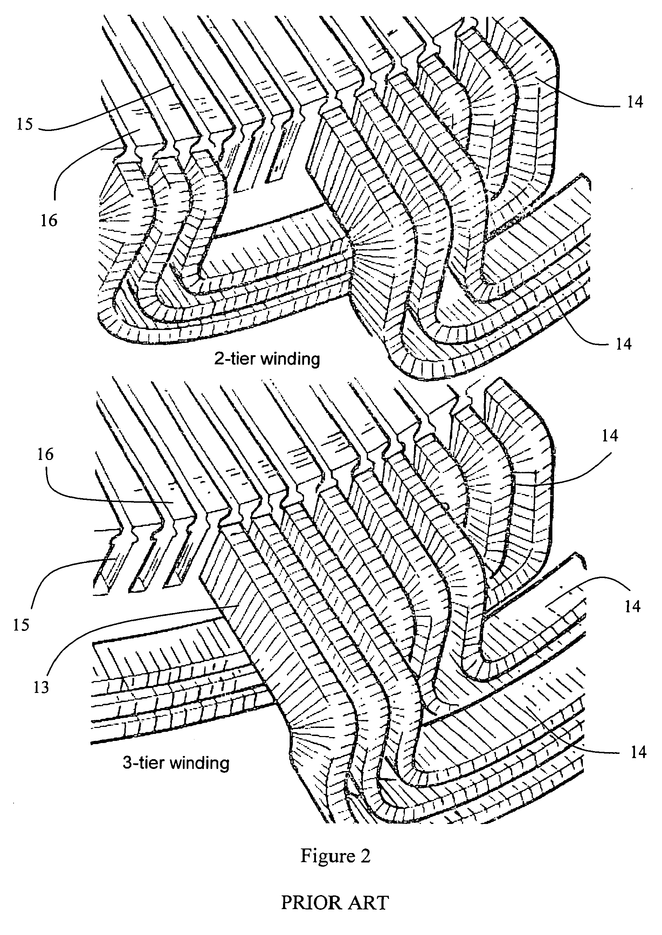

In physically large electrical machines it is quite common to use two-layer coils (also known as "diamond" or "pulled diamond" coils). However, in physically large low-speed electrical machines with a low number of slots-per-pole-per-phase it can be cheaper to use single-layer coils (also known as "concentric" coils). An example of a conventional single-layer coil is shown in Figure 1. The coil is formed from one or more insulated conductors as a complete loop and has several turns. The coil is received in slots provided in a surface of a stator and includes axially-extending runs 13 that are received within the slots and endwindings 14 that protrude out of the ends of the stator. Conventional two-tier and three-tier stator windings are shown in Figure 2. In these stator windings the endwindings of the coils forming the inner tier or tiers (i.e. the tier or tiers closest to the end of the stator) are bent away from the axis of the stator by up to 90 degrees so that they may pass over the coils forming the outer tier or tiers. The endwindings of the coils forming the outermost tier do not need to pass over other coils and can be substantially parallel to the axis of the stator or bent away from the axis of the stator by up to 90 degrees.

The coils can be inserted in slots 15 in the inner surface of the stator 16 and can be arranged concentrically in groups as shown in Figure 2. The slots can be open slots or semi-open slots. Open slots are those where the width of the slot opening at the air gap of the electrical machine between the stator and the rotor is substantially the same as the width of the part of the slot in which the coil is accommodated. Semi-open slots are those where the width of the slot opening at the air gap is less than the width of the part of the slot in which the coil is accommodated and the opening may be offset to one side.

The angle between the axially-extending runs of the coil (normally referred to as the "pitch angle" of the coil) depends on the distance between the slots that receive them (normally referred to as the "pitch" of the coil) and the radius of the surface in which the slots are formed. The method of the present invention, as described in more detail below, is particularly suitable for forming single-layer coils that have a small pitch angle and where the pitch of the coils is much less than the axial length of the coils. However, the method can also be used to form coils in which the pitch angle is large and the pitch of the coils is much greater in proportion to the axial length of the coils.

Single-layer coils are conventionally formed in a number of stages that often include manual operations. The coils are therefore both time-consuming and costly to form.

### Summary of the Invention

The present invention aims to provide a quicker, easier and cheaper method of forming a single-layer coil for an electrical machine in a single process from a length of conductor by winding the conductor around first and second coil-forming members provided on a beam having a longitudinal axis and which is capable of being rotated about a first axis of rotation that is substantially parallel to the longitudinal axis of the beam and a second axis of rotation that is substantially at right angles to the longitudinal axis of the beam.

The beam can be rotated about the first axis of rotation to form first and second endwindings of the coil and rotated about the second axis of rotation to form first and second substantially straight runs of the coil extending between the endwindings. The steps of rotating the beam about the first axis of rotation to form first and second endwindings of the coil and rotating the beam about the second axis of rotation to form first and second substantially straight runs of the coil extending between the endwindings are preferably carried out a predetermined number of times to form a wound coil having a plurality of turns.

The method is therefore particularly intended for forming single-layer coils for inner tiers of multi-tier stator windings that have endwindings that are bent away from the axis of the stator. The coil is formed in a single continuous process and with a minimum of manual handling.

The method can be used to form any particular type of single-layer coil by adapting the size and shape of the beam, the first and second coil-forming members and the rest of the forming apparatus accordingly. For example, the method can be used to form a single-layer coil for an inner tier with one coil per group or with several coils per group. The method is particularly suitable for coils that have a small pitch angle and where the pitch of the coils is much less than the axial length of the coils. However, the method can also be used to form coils in which the pitch angle is large and the pitch of the coils is much greater in proportion to the axial length of the coils.

The present invention further provides a method of forming a single-layer coil for an electrical machine in a single process from a length of conductor by winding the conductor around a beam having a longitudinal axis and which is capable of being rotated about a first axis of rotation that is substantially parallel to the longitudinal axis of the beam and a second axis of rotation that is substantially at right angles to the longitudinal axis of the beam, the beam including first and second coil-forming members spaced apart in a direction parallel to the longitudinal axis of the beam, the method including the step of forming a single turn of the wound coil by:
forming a first endwinding adjacent to the first coil-forming member by rotating the beam a predetermined angle about the first axis of rotation in a predetermined sense to bend the length of conductor about a surface or surfaces of the first coil-forming member;
forming a first transition bend by rotating the beam a predetermined angle about the second axis of rotation in a predetermined sense to bend the length of conductor about a surface of the first coil-forming member to form a first substantially straight run between the first coil-forming member and the second coil-forming member;
forming a second transition bend by rotating the beam a predetermined angle about the second axis of rotation in the predetermined sense to bend the length of conductor about a surface of the second coil-forming member;
forming a second endwinding adjacent to the second coil-forming member by rotating the beam a predetermined angle about the first axis of rotation in a sense that is opposite to the predetermined sense to bend the length of conductor about a surface or surfaces of the second coil-forming member;
forming a third transition bend by rotating the beam a predetermined angle about the second axis of rotation in the predetermined sense to bend the length of conductor about a surface of the second coil-forming member to form a second substantially straight run between the second coil-forming member and the first coil-forming member; and
forming a fourth transition bend by rotating the beam a predetermined angle about the second axis of rotation in the predetermined sense to bend the length of conductor about a surface of the first coil-forming member.

In each case, the transition bend is a bend in the conductor that is adjacent to an end of a stator of an electrical machine when the coil is inserted into slots in the stator and forms a transition between the endwindings that protrude out of the ends of the stator and the substantially straight runs that are received in the slots.

The steps of forming the first endwinding, the first and second transition bends, the second endwinding and the third and fourth transition bends are preferably carried out a predetermined number of times to form a wound coil having a plurality of turns, with each subsequent turn being overlayed directly on top of the preceding turn.

In practice, the starting and finishing steps of the method will be determined by the desired location of the coil leads. This means that the method may, for example, start with the step of forming of the fourth transition bend, followed by the step of forming of the first endwinding and finish with the step of forming of the third transition bend.

For endwindings that are bent away from the axis of the stator by substantially 90 degrees then the forming of the transition bends preferably includes rotating the beam substantially 90 degrees about the second axis of rotation in the predetermined sense. First and second endwindings can be formed by rotating the beam by an angle corresponding to a desired pitch angle of the coil about the first axis of rotation in the predetermined sense and in a sense opposite to the predetermined sense, respectively. All the predetermined angles of rotation may be slightly more than the corresponding angles in the desired coil shape to compensate for the elastic spring back of the conductor.

For endwindings that are bent away from the axis of the stator by less than 90 degrees then the forming of the transition bends can include rotating the beam by a required angle about the second axis of rotation in either or both of the predetermined sense and a sense opposite to the predetermined sense. First and second endwindings can be formed by rotating the beam by an angle corresponding to a desired pitch angle of the coil about the first axis of rotation in the predetermined sense and in a sense opposite to the predetermined sense, respectively. First and second endwindings can also be formed by rotating the beam about the second axis of rotation in either or both of the predetermined sense and a sense opposite to the predetermined sense in combination with the rotation about the first axis. The rotation about the first and second axes of rotation can be carried out sequentially (i.e. a rotation of a predetermined angle about the first axis of rotation followed by a rotation of a predetermined angle about the second axis of rotation) or simultaneously. All the predetermined angles of rotation may be slightly more than the corresponding angles in the desired coil shape to compensate for the elastic spring back of the conductor.

In a typical case where the first and second endwindings are bent at substantially 90 degrees to the axis of the stator, a wound coil having a plurality of turns can be formed by repeatedly carrying out the following steps (i) rotating the beam by an angle corresponding to a desired pitch angle of the coil about the first axis of rotation in the predetermined sense, (ii) rotating the beam by substantially 180 degrees about the second axis of rotation in the predetermined sense, (iii) rotating the beam by an angle corresponding to the desired pitch angle of the coil about the first axis of rotation in a sense opposite to the predetermined sense, and (iv) rotating the beam by substantially 180 degrees about the second axis of rotation in the predetermined sense. It is important to note that rotation of the beam about the second axis of rotation to form the transition bends always takes place in the same sense whereas rotation of the beam about the first axis of rotation takes place in one sense during the forming of the first endwinding and in the opposite sense during the forming of the second endwinding.

The size and shape of the first and second coil-forming members will be selected to produce the desired shape of the first and second endwindings.

The length of conductor is preferably supplied to the beam under tension because this takes out any residual bends in the conductor that would otherwise distort the coil. For convenience, it is normally the case that the length of conductor is supplied to the beam from a rotatable drum. A tensioning device may therefore be provided between the drum and the beam to keep the tension in the length of conductor at a predetermined level.

The length of conductor is preferably supplied along a direction that is substantially perpendicular to the second axis of rotation. If the length of conductor is supplied from a different direction then there is a risk that it might not form close layers as the turns of the wound coil are built up which may cause faults to develop in the coil.

The conductor may be a copper strip or tape of rectangular cross-section. However, other electrically-conductive materials such as aluminium can be used. The conductor may include one or more parallel strands of electrically-conductive material and the number of strands may be determined by a number of parameters such as the rated voltage and the power of the electrical machine. The conductor may be insulated by any conventional method.

### Drawings

Figure 1 is a perspective view of a conventional single-layer coil for an inner tier of a stator winding;
Figure 2 is a perspective view of conventional two- and three-tier stator windings;
Figure 3 is a schematic view of an apparatus for carrying out a forming process according to the present invention;
Figures 4 to 12 are schematic views showing various steps in the forming process; and
Figure 13 is a perspective view of a wound coil having a number of turns.

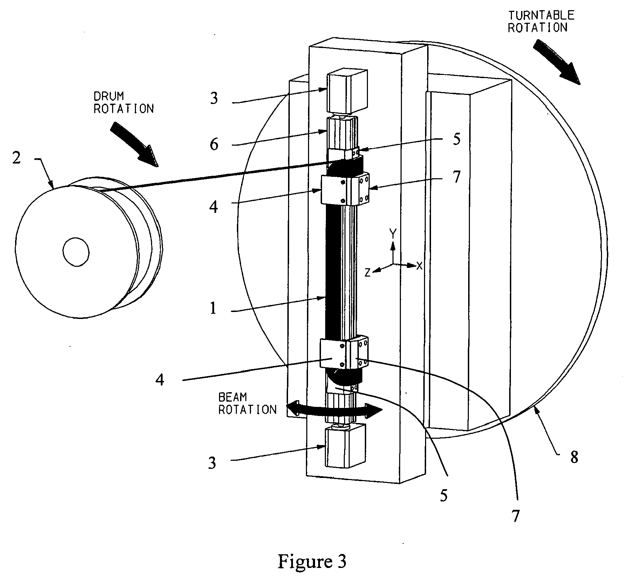

With reference to Figure 3 an apparatus for forming a single-layer coil includes a beam 6 that is mounted on bearings for rotation about its longitudinal axis by rotary actuators 3. Any suitable rotary actuator or motor (electric, pneumatic, hydraulic etc.) can be used. The beam 6 can be rotated in both senses as shown by the doubleheaded arrow labelled "beam rotation". The rotary actuators 3 or the motors form part of a supporting structure for the beam 6 and are mounted on a turntable 8. The turntable 8 is mounted for rotation about an axis that is at right angles to the longitudinal axis of the beam 6. The turntable 8 can be rotated by a rotary actuator or a motor (not shown).

The turns of the conductor are wound around a pair of spaced-apart coil-forming members 5 and 7 that form part of the beam 6. The size and shape of the coil-forming members 5 and 7, and their spacing in the direction parallel to the longitudinal axis of the beam 6, will depend on the desired configuration of the finished coil. For example, the coil-forming members can be adapted to form single-layer coils having a large pitch and the spacing can be adapted to form single-layer coils that are suitable for a stator having a small number of poles where the gap between the straight runs is large in relation to the axial length of the straight runs or the axial separation between the endwindings. A coil retainer 4 can be used to retain the overlaying turns of the conductor in position during the rotation steps.

The conductor is supplied from a drum 2 and is kept under tension during the forming process. In the case where the conductor has two or more parallel strands then a separate drum can be provided for each strand. The length of conductor is arranged such that it is supplied in a direction that is substantially perpendicular to the longitudinal axis of the turntable 8. The drum 2 is allowed to rotate in one sense as shown by the single-headed arrow labelled "drum rotation" as the conductor is wound around the coil-forming members 5 and 7 by the driven rotation of the beam 6 and the turntable 8.

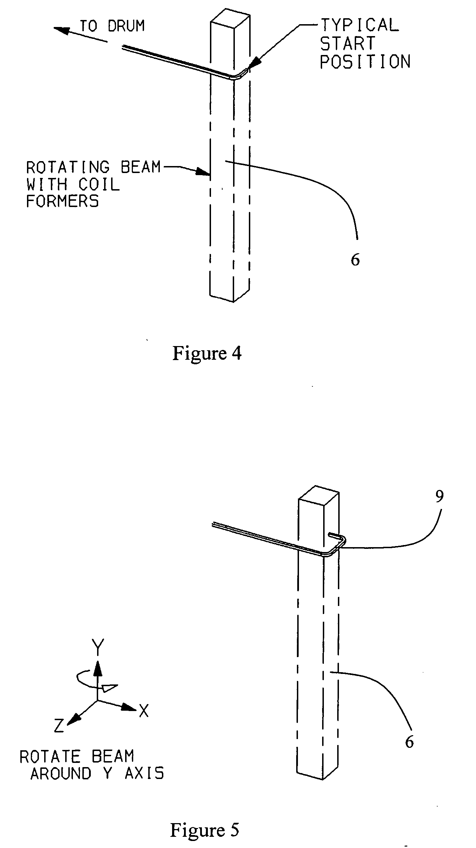

The forming process will be described with reference to Figures 4 to 12. For ease of clarity, the forming process described is one where all of the rotations are either 90 or 180 degrees. It will readily be appreciated that the angles of rotation can be altered depending on the desired construction of the finished coil. Moreover, the angle of rotation about the longitudinal axis of the beam to form the endwindings of the coil can be increased slightly to allow for the elastic spring back of the conductor.

A typical start position is shown in Figure 4 where the conductor is secured to the first coil-forming member (not shown). Although in Figures 3 to 12 the beam 6 has a square cross-section, it will be readily appreciated that the beam may have any other suitable cross-section depending on the desired construction of the finished coil. It will be seen that the conductor is supplied from the drum in a direction that lies substantially perpendicular to the axis of rotation of the turntable 8 at all times during the forming process.

As shown in Figure 5, the beam 6 is rotated by an angle corresponding to the desired pitch angle of the coil about its longitudinal axis in a first sense. It will be seen that this rotation completes the formation of the first substantially U-shaped endwinding 9 of the coil.

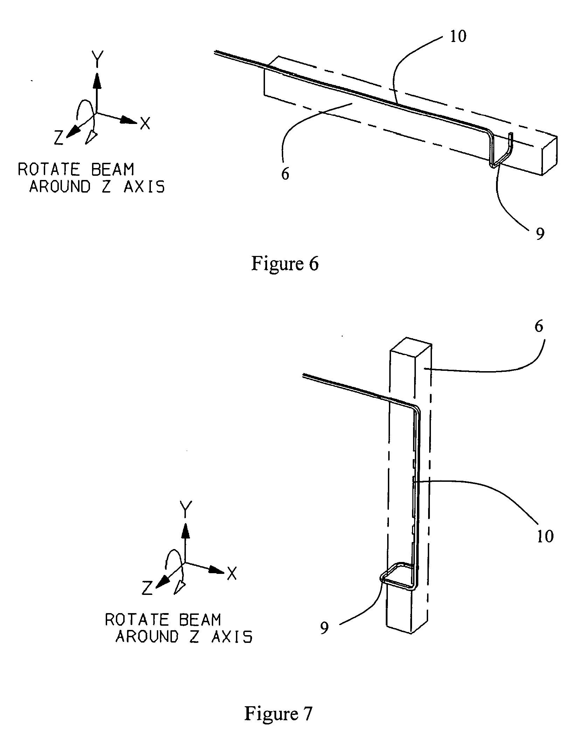

The turntable (not shown) is then rotated by 90 degrees about its axis of rotation in a first sense to form the first transition bend. As shown in Figure 6, this rotation bends the conductor about an edge of the first coil-forming member (not shown) to create a first straight run 10 of the coil that will be received in a slot in the stator. The angle through which the turntable (not shown) is rotated during the formation of the first transition bend effectively determines the angle at which the first endwinding 9 is bent relative to the second straight run 12.

To form the second transition bend, the turntable (not shown) is rotated by a further 90 degrees about its axis of rotation in the first sense. As shown in Figure 7, this rotation bends the conductor about an edge of the second coil-forming member (not shown). The spacing between the first and second coil-forming members will determine the axial length of the first and second straight runs 10 and 12 and the axial distance between the first and second endwindings 9 and 11. The angle through which the turntable (not shown) is rotated during the formation of the second transition step effectively determines the angle at which the second endwinding 11 is bent relative to the first straight run 10.

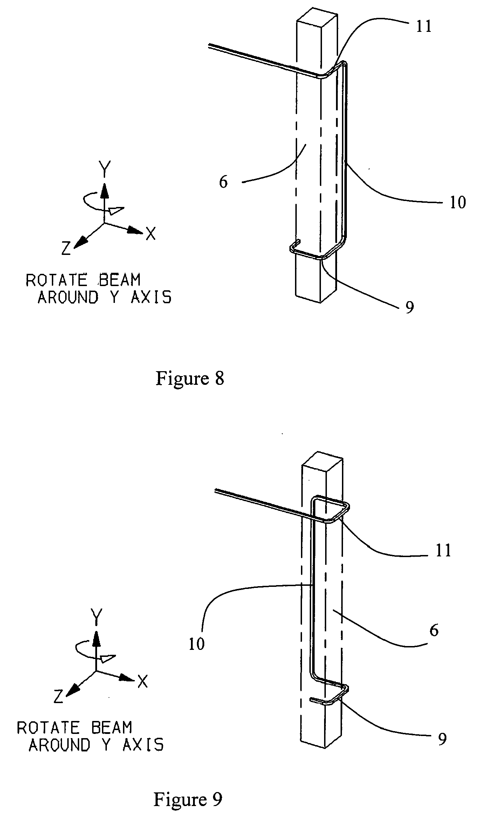

As shown in Figures 8 and 9, to form the second substantially U-shaped endwinding 11 the beam 6 is rotated by an angle (in this case 180 degrees) corresponding to the desired pitch angle of the coil about its longitudinal axis in a second sense, opposite to the first sense, to extend the conductor around the sides of the second coil-forming member (not shown).

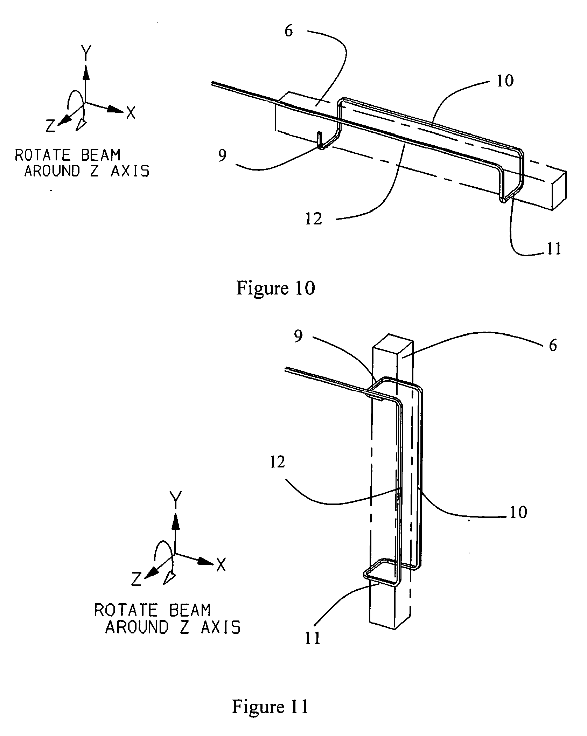

The turntable (not shown) is then rotated by 90 degrees about its axis of rotation in the first sense to form the third transition bend. As shown in Figure 10, this bends the conductor about an edge of the second coil-forming member (not shown) to create a second straight run of the coil 12 that will be received in a slot in the stator. The angle through which the turntable (not shown) is rotated during the formation of the third transition bend is substantially the same as that during the formation of the second transition bend.

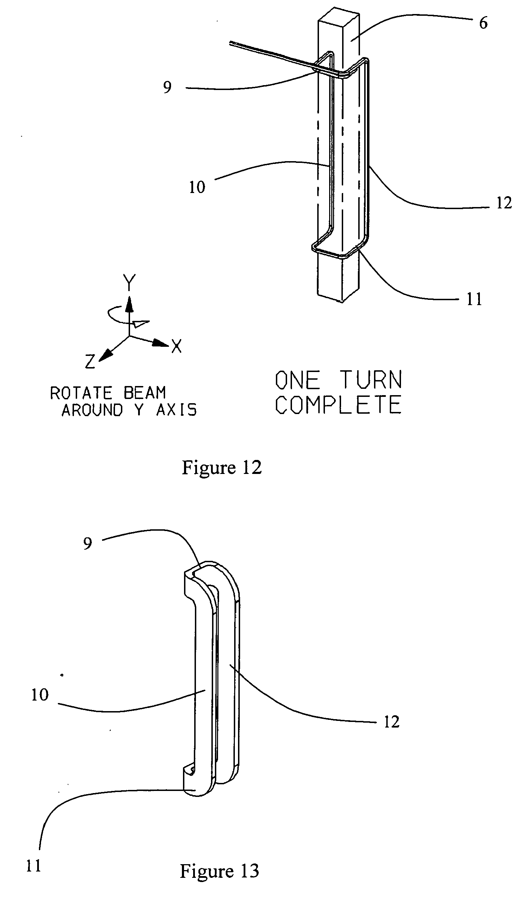

To form the fourth transition bend, the turntable (not shown) is rotated by a further 90 degrees about its axis of rotation in the first sense. As shown in Figure 11, this rotation bends the conductor about an edge of the first coil-forming member (not shown). The angle through which the turntable (not shown) is rotated during the fourth transition step is substantially the same as that during the formation of the first transition bend.

Finally, as shown in Figure 12, rotating the beam 6 through 90 degrees about its longitudinal axis in the first sense brings the conductor back to the starting point to complete a single turn. For second and subsequent turns, it is easier to think of the position shown in Figure 11 as the starting point of the forming process. The forming process can therefore be thought of as starting by rotating the beam 180 degrees about its longitudinal axis in the first sense to extend the conductor around the sides of the first coil-forming member (not shown) to form the first substantially U-shaped endwinding 9.

The forming process outlined above is repeated a required number of times to layer turns of the conductor on top of each other and produce a wound coil. An example of a wound coil having a number of turns is shown in Figure 13.

The forming process outlined above, and illustrated in Figures 4 to 12, may be considered as including the following basic steps: (i) rotating the beam 6 through 180 degrees in a first sense to form a first endwinding 9, (ii) rotating the turntable 8 through 180 degrees in a first sense to form a first straight run 10, (iii) rotating the beam 6 through 180 degrees in a second sense, opposite to the first sense, to form a second endwinding 11, and (iv) rotating the turntable 8 through 180 degrees in the first sense to form a second straight run 12.

## Claims

1. A method of forming a single-layer coil for an electrical machine in a single process from a length of conductor by winding the conductor around first and second coil-forming members (5, 7) provided on a beam (6) having a longitudinal axis and which is capable of being rotated about a first axis of rotation that is substantially parallel to the longitudinal axis of the beam and a second axis of rotation that is substantially at right angles to the longitudinal axis of the beam.

2. A method according to claim 1, wherein the beam (6) is rotated about the first axis of rotation to form first and second endwindings (9, 11) of the coil and wherein the beam (6) is rotated about the second axis of rotation to form first and second substantially straight runs (10, 12) of the coil between the endwindings.

3. A method according to claim 1 or claim 2, wherein the steps of rotating the beam (6) about the first axis of rotation to form first and second endwindings (9, 11) of the coil and rotating the beam (6) about the second axis of rotation to form first and second substantially straight runs (10, 12) of the coil between the endwindings are carried out a predetermined number of times to form a wound coil having a plurality of turns.

4. A method of forming a wound coil for an electrical machine in a single process from a length of conductor by winding the conductor around a beam (6) having a longitudinal axis and which is capable of being rotated about a first axis of rotation that is substantially parallel to the longitudinal axis of the beam and a second axis of rotation that is substantially at right angles to the longitudinal axis of the beam, the beam (6) including first and second coil-forming members (5, 7) spaced apart in a direction parallel to the longitudinal axis of the beam, the method including the step of forming a single turn of the wound coil by:
forming a first endwinding (9) adjacent to the first coil-forming member (5) by rotating the beam (6) a predetermined angle about the first axis of rotation in a predetermined sense to bend the length of conductor about a surface or surfaces of the first coil-forming member (5);
forming a first transition bend by rotating the beam (6) a predetermined angle about the second axis of rotation in a predetermined sense to bend the length of conductor about a surface of the first coil-forming member (5) to form a first substantially straight run (10) between the first coil-forming member (5) and the second coil-forming member (7);
forming a second transition bend by rotating the beam (6) a predetermined angle about the second axis of rotation in the predetermined sense to bend the length of conductor about a surface of the second coil-forming member (7);
forming a second endwinding (11) adjacent to the second coil-forming member (7) by rotating the beam (6) a predetermined angle about the first axis of rotation in a sensed opposite to the predetermined sense to bend the length of conductor about a surface or surfaces of the second coil-forming member (7);
forming a third transition bend by rotating the beam (6) a predetermined angle about the second axis of rotation in the predetermined sense to bend the length of conductor about a surface of the second coil-forming member (7) to form a second substantially straight run (12) between the second coil-forming member (7) and the first coil-forming member (5); and
forming a fourth transition step by rotating the beam (6) a predetermined angle about the second axis of rotation in the predetermined sense to bend the length of conductor about a surface of the first coil-forming member (5).

5. A method according to claim 4, wherein the steps of forming the first endwinding (9), the first and second transition bends, the second endwinding (11) and the third and fourth transition bends are carried out a predetermined number of times to form a wound coil having a plurality of turns.

6. A method according to claim 4 or claim 5, wherein the first transition bend is formed by rotating the beam (6) substantially 90 degrees about the second axis of rotation to bend the length of conductor about a surface of the first coil-forming member (5).

7. A method according to any of claims 4 to 6, wherein the second transition bend is formed by rotating the beam (6) substantially 90 degrees about the second axis of rotation to bend the length of conductor about a surface of the second coil-forming member (7).

8. A method according to any of claims 4 to 7, wherein the third transition bend is formed by rotating the beam (6) substantially 90 degrees about the second axis of rotation to bend the length of conductor about a surface of the second coil-forming member (7).

9. A method according to any of claims 4 to 8, wherein the fourth transition bend is formed by rotating the beam (6) substantially 90 degrees about the second axis of rotation to bend the length of conductor about a surface of the first coil-forming member (5).

10. A method according to claim 4 or claim 5, wherein the first transition bend is formed by rotating the beam (6) through an angle that is less than, or equal to, 90 degrees.

11. A method according to any of claims 4, 5 and 10, wherein the third transition bend is formed by rotating the beam (6) through an angle that is less than, or equal to, 90 degrees.

12. A method according to any preceding claim, wherein the first endwinding (9) is formed by rotating the beam (6) though an angle corresponding to a desired pitch angle of the coil about the first axis of rotation.

13. A method according to any preceding claim, wherein the second endwinding (11) is formed by rotating the beam (6) through an angle corresponding to a desired pitch angle of the coil about the first axis of rotation.

14. A method according to any preceding claim, wherein the length of conductor is supplied to the beam (6) under tension.

15. A method according to any preceding claim, wherein the length of conductor is supplied to the beam from a rotatable drum (2).

16. A method according to any preceding claim, wherein the length of conductor is supplied along a direction that is substantially perpendicular to the second axis of rotation.

17. A method according to any preceding claim, wherein the conductor is an insulated copper strip or tape of rectangular cross-section.

18. A coil-forming apparatus for carrying out the method according to any preceding claim.
